# EUROPÄISCHE PATENTSCHRIFT

(11) **EP 0 751 252 B1**
(45) Veröffentlichungstag und Bekanntmachung des Hinweises auf die Patenterteilung: **31.03.1999**
(21) Anmeldenummer: 96109358.0
(22) Anmeldetag: 12.06.1996
(51) Int. Cl.: D07B 1/06, B60C 9/00, B05D 7/14, B21C 37/04, B21C 9/02

(54) **Gummiartikel mit einer Verstärkung aus gegen Korrosion zu schützenden Seilen**
Rubber article having a reinforcement made from cables to be protected against corrosion
Article en caoutchouc avec un renfort de câbles à protéger contre la corrosion

(30) Priorität: 27.06.1995 DE 19523256
(43) Veröffentlichungstag der Anmeldung: 02.01.1997
(73) Patentinhaber: Continental Aktiengesellschaft, 30165 Hannover (DE)
(72) Erfinder: Stevens, Hendrik, Dr., 30419 Hannover (DE); Kaiser, Bernd, Dr., 30419 Hannover (DE); Kleinhoff, Klaus, 31552 Rodenberg (DE)
(74) Vertreter: Schneider, Egon

(56) Entgegenhaltungen:
- EP-A- 0 470 280
- EP-A- 0 530 445
- DE-A- 3 834 526
- GB-A- 1 507 823
- US-A- 3 563 074

## Beschreibung

Die Erfindung bezieht sich auf einen Gummiartikel gemäß dem Oberbegriff des Patentanspruches 1 und auf ein Verfahren zu seiner Herstellung gemäß dem Oberbegriff des Patentanspruches 6. Besagter Gummiartikel ist ausgestattet mit einer Verstärkung aus Seilen, die in mindestens zwei Schichten gegliedert sind, wobei zumindest ein Filament einer inneren Schicht aus einer metallischen Legierung besteht, wobei zumindest die Filamente der äußeren Schichten des Seiles haftend in dem umgebenden Gummi ggf. unter Verwendung eines Haftvermittlers wie z. B. Messing eingebettet sind, wobei alle aus metallischer Legierung bestehenden Filamente mit einer gegen Korrosion schützenden Schicht überzogen sind.

Aus der DE-OS 37 29 566 ist ein Pulver aus intrinsisch leitfähigem Polymer bekannt. Es kann verwendet werden zur Herstellung von elektrischen Halbleitern, oder von vor elektrischer Aufladung gesicherten Gehäusen von elektrischen Geräten, oder auch zur Herstellung von elektrischen Kondensatoren.

Aus der EP-PA 0 623 159 ist ein vor Korrosion schützender Anstrich bekannt, in dem ein intrinsisch leitfähiges Polymer dispergiert ist, vorzugsweise Polyanilin. Das Bindemittel wird ausgewählt aus den chemischen Stoffklassen der im wesentlichen nicht-leitfähigen Alkyde, Vinyle, Vinyliden-Chloride, (Flour-) Epoxyde, ungesättigte Ester, in Wärme aushärtenden Acryle, Phenole und Polyurethane. Dieser Anstrich soll vorzugsweise auf das blanke vor Korrosion zu schützende Metall aufgetragen werden und dort eine gute Haftung erreichen.

Die Dauerhaftigkeit eines solchen Korrosionsschutzes soll auch ohne die ansonsten übliche Beimischung von als Opferanode wirkendem Zinkstaub, die unter dem Gesichtspunkt des Gesundheits- und Umweltschutzes unerwünscht ist, gut sein.

In der Zeitschrift "**INDUSTRIE** ANZEIGER", Ausgabe 50/94, Seiten 37 bis 39, ist insbesondere auf der Seite 37 in der rechten Spalte die gegen Korrosion schützende Wirkung des Polyanilins näher beschrieben und es ist dem insbesondere zu entnehmen, daß die bereits 1985 durch eine Veröffentlichung von David DeBerry in der "J. Electrochem. Soc." 1985/132, 1022 ausgelöste Entwicklung inzwischen zu technisch einsatzfähigen, allerdings noch zu teuren Lacken geführt hat. Ähnlichen Inhaltes ist der Aufsatz von Herrn Wessling in der "**ADVANCED MATERIALS**" 1994/6, NO. 3, SEITEN 226 BIS 228.

Es ist ferner bekannt, daß anstelle des bevorzugten Polyanilins auch sein Radikal-Kation-Salz eingesetzt werden kann. Deshalb soll der Ausdruck "Polyanilin" im Rahmen dieser Anmeldung solche Derivate mitumfassen.

Aus der DE 38 34 526 A1 ist ein Verfahren zur Erzeugung dünner oder ultradünner Schichten von intrinsisch leitfähigen Polymeren auf nicht näher - weder dem Material noch der Gestalt nach - spezifizierten Substraten bekannt, das dadurch gekennzeichnet ist, dass man das zu beschichtende Substrat mit einer fließfähigen Dispersion des intrinsisch leitfähigen Polymeren kontaktiert, das intrinsisch leitfähige Polymer ohne elektrischen Strom auf dem Substrat abscheidet und danach das beschichtete Substrat einer Wärmebehandlung unterzieht.

Die EP 0 470 280 A1 lehrt Stahldraht zur Verstärkung von Gummiartikel und ein Verfahren zu deren Herstellung; besagter Stahldraht soll oberflächlich beschichtet sein, wobei die Beschichtung ein solches Polymer enthalten soll, dessen monomerer Vorläufer ein Triazin-thiol Derivat ist.

Ein solcher Draht soll in der Weise hergestellt werden, dass er innerhalb eines Schmierbades durch eine Düse gezogen wird, wobei das Schmiermittel ein Polymer aus einem Triazin-thiol Derivat enthalten soll. Vorzugsweise soll besagtes Schmiermittel eine Emulsion sein, welche besagtes Triazin-thiol Derivat, einen Hochdruck-Schmierstoff, einen Öligkeits-Verbesserer, einen Emulgator und einen Schäumungs-Unterdrücker enthält. Im Kontrast zum Worte "Emulsion" ist allerdings im selben Satze auch die Rede von einer "Dispersion" in einem "Lösungsmittel". Abgesehen von dieser Unklarheit sagt diese Schrift nichts zu der Frage, wie die für die meisten Gummiartikel in hohem Maße benötigte Haftfestigkeit zwischen besagtem beschichteten Draht und dem umgebenden Gummi erreicht werden soll.

Der Erfindung liegt allgemein die Aufgabe zugrunde, die gute korrosionsschützende Wirkung der intrinsisch leitfähigen Polymere, insbesondere des Polyanilins, auch für Gummiartikel mit einer Verstärkung aus gegen Korrosion zu schützenden Seilen nutzbar zu machen.

Es wurde zunächst versucht, die Stahlseile mit den bereits verfügbaren Polyanilinlacken zu überziehen - was gelang -, sie in Kautschuk einzubetten - was auch gelang - und schließlich damit Versuchsreifen zu bauen - die nicht hielten. Von daher stellte sich spezieller formuliert die Aufgabe, das Haltbarkeitsproblem zu untersuchen und zu lösen.

Die Aufgabe wird erfindungsgemäß dadurch gelöst, daß zumindest einige Filamente der inneren Schicht(en) gegen Korrosion durch eine Schicht geschützt sind, die ein intrinsisch leitfähiges Polymer enthält, während die übrigen Filamente in an sich bekannter Weise gegen Korrosion geschützt sind, z. B. durch einen Messingüberzug.

Dieser Lösung liegt die durch langwierige Untersuchungen erhärtete Erkenntnis zugrunde, daß nur die Haftung der Polyanilin enthaltenden Schicht am Metalldraht eine hinreichende Lastwechselspielfestigkeit bereitstellt, nicht aber die Haftung der Polyanilin enthaltenden Schicht am Kautschuk. Nach dem diese eine von zunächst zahlreichen Hypothesen zur Erklärung der Ausfälle der Versuchsreifen durch die Untersuchungen bestätigt war, wurde zunächst versucht, die mangelnde Haftung zu verbessern. Dabei ist aber bis heute kein ausreichender Fortschritt erreicht worden. Der Witz der vorliegenden Erfindung liegt darin, daß die äußeren Filamente der Metallseile einfach konventionell mit einer kupferhaltigen Legierung beschichtet werden, die bekanntlich ein guter Haftvermittler zu den im Reifenbau üblichen Kautschukarten und Mischungen sind, und nur weiter innen liegende Filamente mit intrinsisch leitfähigen Polymeren zu beschichten, wobei überraschender Weise die Beschränkung des modernen organischen Korrosionsschutzes auf die inneren Filamente nahezu die gleich gute korrsionsschützende Wirkung entfaltet wie bei einer Behandlung aller - also auch der äußeren - Filamente.

Es ist noch nicht zweifelsfrei geklärt, wie die erfreuliche und überraschende Verbesserung des Korrosionsschutzes (auch) der äußeren Filamente zustande kommt, obwohl die erfindungsgemäß nur konventionell beschichtet sind.

Die Forscher vermuten, daß die kleinen Kontaktflächen auf der zur Seilquerschnittsmitte weisenden Seite der äußeren Filamente mit intrinsisch leitfähig beschichteten inneren Filamenten gerade wegen der elektrischen Leitfähigkeit aller Kontaktpartner eben völlig ausreicht. Der so ermöglichte Elektronenaustausch beeinträchtigt die Gummihaftung der konventionell beschichteten äußeren Filamente nicht.

Als intrinsisch leitfähiges Polymer ist vorzugsweise Polyanilin oder seine Derivate verwendet. Hiermit wurden bislang die brauchbarsten Dispersionen und Emulsionen erstellt.

Wie an sich bekannt, sollten auch in erfindungsgemäßen Gummiartikeln zumindest einige der mit dem intrensisch leitenden Polymer beschichteten Filamente aus Stahl bestehen.

Es ist möglich, die intrensisch leitfähige Polymerbeschichtung direkt auf die inneren - vorzugsweise aus Stahl bestehenden - Metallfilamente aufzutragen. Bekanntlich wird hiermit ein gutes Haftvermögen erzielt. Eine bevorzugte Ausführung ist aber dadurch gekennzeichnet, daß die mit dem intrinsisch leitenden Polymer beschichteten Filamente unter dieser Polymerbeschichtung eine kupferhaltige Schicht aufweisen; dies erleichtert in der Stahlcordherstellung deutlich die Logistik, weil einfach alle Filamente mit Messing oder dergleichen beschichtet werden und erst danach die selektive Behandlung, also die Beschichtung mit Polyanilin oder dergleichen, beginnt und weil zwischen dem Drahtziehen und Drahtpatentieren, wo erhebliche Temperaturen erreicht werden, so keine Qualitätsprobleme durch zwischenzeitliche Korrosion entstehen können.

Aus gleichem Grunde kann es auch zweckmäßig sein, daß die mit dem intrinsisch leitenden Polymer beschichteten Filamente unter dieser Polymerbeschichtung eine zinkhaltige (vorzugsweise anstelle, möglicherweise aber auch zusätzlich zu einer kupferhaltigen) Schicht aufweisen.

Um ein intrinsisch leitfähiges Polymer auf eine metallische Oberfläche aufzubringen, ist es bekannt, zunächst eine Dispersion des intrinsisch leitfähigen Polymeren herzustellen, und die zu beschichtende Oberfläche - ggf. mehrfach mit Zwischentrocknungen - darin einzutauchen. Um dies mit ausreichender Verfahrensgeschwindigkeit bei großer Zuverlässigkeit auszuführen, empfiehlt sich eine dadurch gekennzeichnete Weiterbildung dieses Verfahrens zum Aufbringen, daß das Aufbringen unter einem Druck von mindestens 4 bar erfolgt. Vorzugsweise wird dabei das intrinsisch leitfähige Polymer zumindest dem Ziehmittel zur Schmierung der letzten Ziehdüse (drawing die) zugemischt.

Um das intrinsisch leitfähige Polymer auf eine metallische, vorzugsweise mit kupferhaltiger Legierung beschichtete, Oberfläche möglichst leicht aufzubringen, wird vorzugsweise zunächst das intrinsisch leitfähige Polymer in einem als Schmiermittel für den Drahtziehprozeß geeigneten Öl, oder einer Ölsäure oder einem Fett oder dergleichen dispergiert und dieses mit dem intrinsisch leitfähigen Polymer angereicherte Schmiermittel anschließend in an sich bekannter Weise in Wasser emulgiert und am Ziehdüseneinlauf aufgebracht. Für die Drahtzieher ändert sich gegenüber der geläufigen Verfahrensweise so nämlich nur, daß sie ein "anderes", nämlich mit dem intrisisch leitfähigen Polymer angereichertes, Schmiermittel einzusetzen haben und die Drahtchargen, die so hergestellt wurden, bis hin zum Verkauf von den Drahtchargen zu unterscheiden haben, die mit konventionellem Ziehschmiermittel, üblicherweise einer Öl-Wasser-Emulsion, hergestellt wurden.

Besonders leicht ist die Herstellung der Dispersion des intrinsisch leitfähigen Polymers, das auf eine metallische, vorzugsweise mit kupferhaltiger Legierung beschichtete Oberfläche aufzubringen ist, wenn das intrinsisch leitfähige Polymer zunächst in Isopropanol dispergiert wird und dann diese Dispersion als Schmiermittel am Ziehdüseneinlauf zumindest der letzten, ggf. auch schon der vorletzten, Ziehdüse aufgebracht wird. Dabei sollte zur Unterdrückung einer vom leicht entzündlichen Propanol ausgehenden Brandgefahr in der Umgebung der Ziehdüse eine reaktionsträge Schutzgasatmosphäre, vorzugsweise CO₂ und/oder Stickstoff und/oder Edelgase enthaltend, aufgebaut werden. Technisch und wirtschaftlich empfehlenswerte Gasmischungen sowie die erforderlichen Ausströmungsgeschwindigkeiten in Abhängigkeit vom Abstand der Schutzgasdüse vom potentiellen Brandherd sind dem Fachmann zugänglich aus dem Gebiet der Schweißungen unter Schutzgas, die heute bereits nahezu jede Automobilwerkstatt ausführen kann.

Die Erfindung wird nachfolgend anhand zweier Figuren näher erläutert. Es zeigt:
- Fig. 1: einen Gummiartikel, nämlich hier ein Förderband, im perspektivischen Querschnitt mit mehreren darin eingebetteten Stahlseilen und
- Fig. 2: als vergrößerte Einzelheit aus Fig. 1 in einem perspektivischen Schnitt ein isoliertes Stahlseil.

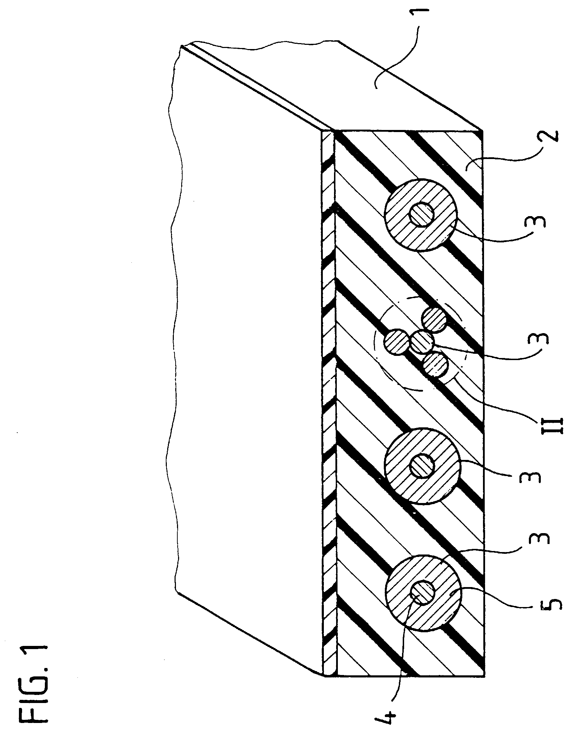

Figur 1 zeigt einen Gummiartikel 1, nämlich hier ein Förderband, im perspektivischen Querschnitt mit mehreren darin eingebetteten Stahlseilen 3. Diese Stahlseile 3 dienen der Bereitstellung einer ausreichenden Zugfestigkeit und Zugsteifigkeit bei Aufrechterhaltung guter Biegewilligkeit.

Aus ähnlichen Gründen werden solche Stahlseile aber auch zur Verstärkung anderer Gummiartikel eingesetzt, zum Beispiel in den Gürtellagen von Reifen mit Radialkarkassen und in den Karkassen von schweren Reifen, insbesondere LKW- und Flugzeug-Radialreifen.

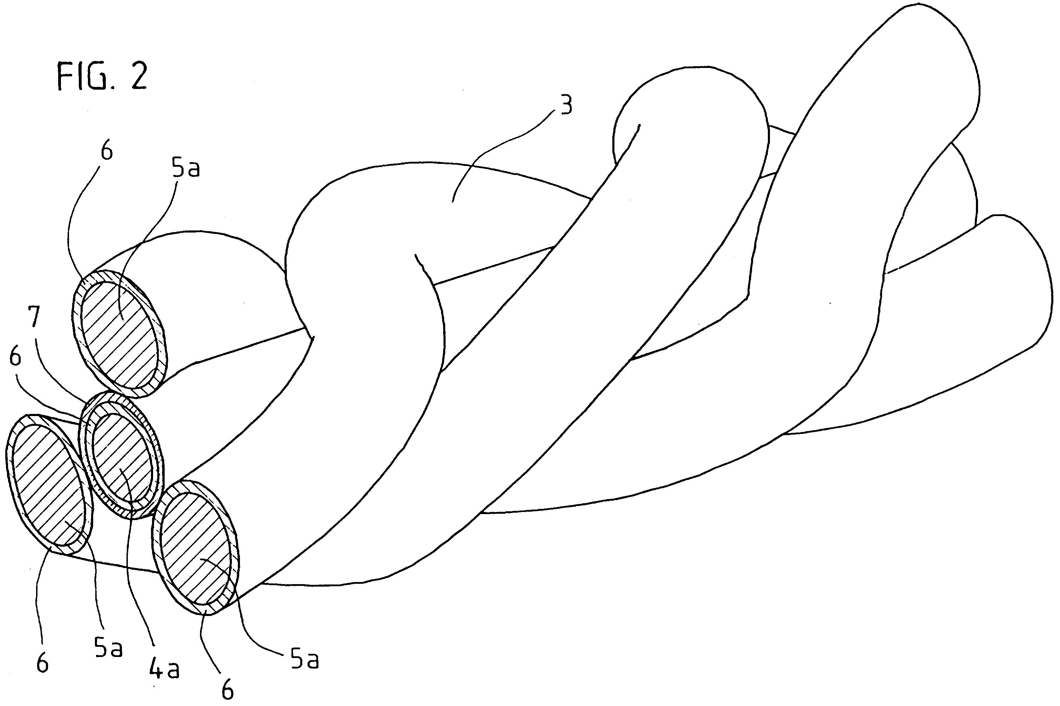

Die in diesem Ausführungsbeispiel verwendeten Stahlseile 3 sind in nur zwei Schichten gegliedert, einer inneren Schicht 4 und einer äußersten Schicht 5. Von einem der gleichartigen Stahlseile 3 ist der Querschnitt genauer als Einzelheit II gezeigt und noch genauer - isoliert vom umgebenden Gummi 2 - in der Figur 2.

Einzelheit II und Figur 2, ein perspektivischer Schnitt, zeigen, daß in diesem Ausführungsbeispiel die innere Schicht 4 aus einem einzigen, nicht gewendelten Draht 4a besteht, der üblicherweise als "Seele" bezeichnet wird, und die äußere Schicht 5 aus drei Drähten 5a, die um die Seele 4a herumgewendelt sind.

Korrosion entsteht regelmäßig dann, wenn die das Stahlseil 3 gegen seine Umgebung abschirmende Gummischicht(en) verletzt ist (sind), was bei Fahrzeugreifen vor allem im Laufflächenbereich und manchmal auch im Seitenwandbereich und bei Förderbändern auf der dem Fördergut zugewandten Seite immer wieder vorkommt. Durch solche Verletzungen kommt es - beschleunigt durch die Biegewechselbelastung - zur Korrosion mit einem Festigkeitsabfall an der Verletzungsstelle. Die Korrosion an der Verletzungsstelle ist nur der Primäreffekt; allmählich kommt es durch die - durch die Sauerstoffaufnahme bedingte - Volumenzunahme an den Rändern der primären Korrosionsstelle und durch die entstandene Kerbwirkung als Sekundäreffekt zu einer Ablösung des anhaftenden Gummis von der metallischen Oberfläche. In den so freigegebenen Spalt dringt die Feuchtigkeit weiter entlang der Drahtoberfläche vor.

Eine erhebliche Verlangsamung der elektrochemischen Korrosion, insbesondere des genannten Sekundäreffektes, wird erfindungsgemäß dadurch erreicht, daß zumindest einige Filamente der inneren Seilschichten, in diesem Ausführungsbeispiel des einen Seelendrahtes 4a, anstelle oder vorzugsweise zusätzlich zur bekannten Beschichtung 6 mit einer kupferhaltigen Legierung, durch eine ein intrinsisch leitfähiges Polymer enthaltende Schicht 7 geschützt sind. Für die Anhaftung des gesamten Seiles 3 am umgebenden Gummi 2 ist die Haftung der inneren Seilschichten 4, also hier des Seelendrahtes 4a weniger wichtig; Figur 1 zeigt den bei einigen Konstruktionen sogar auftretenden Fall, daß der umgebende Gummi gar nicht bis ganz zum Seelendraht vorgedrungen ist, sodaß es ohnehin zu keiner Haftung zwischen Gummi und Seelendraht kommt. Zumindest die Drähte der äußersten Schicht, hier die drei Drähte 5a der einzigen äußeren Schicht 5, sind konventionell mit einer solchen metallischen Oberfläche ausgestattet, daß eine sehr gute Haftung zum umgebenden Gummi 2 erreicht wird; hierzu dient die kupferhaltige Schicht 6.

Zusammenfassend betrifft die Erfindung einen Gummiartikel mit einer Verstärkung aus in zumindest zwei Schichten gegliederten Seilen, wobei zumindest ein Draht einer inneren Schicht aus metallischer Legierung besteht und zumindest die Filamente der äußeren Schichten des Seiles haftend in dem umgebenden Gummi ggf. unter Verwendung eines Haftvermittlers wie z. B. Messing eingebettet sind, wobei alle aus einer Metall-Legierung bestehenden Filamente mit einer gegen Korrosion schützenden Schicht überzogen sind. Zwecks besseren Korrosionsschutzes bei ausreichender Haftfestigkeit zum umgebenden Gummi sind zumindest einige Filamente der inneren Schicht(en) vor Korrosion durch eine ein intrinsisch leitfähiges Polymer enthaltende Schicht zu schützen, während die übrigen Filamente, besonders die der äußersten Schicht, in an sich bekannter Weise gegen Korrosion zu schützen sind, z. B. durch einen Messingüberzug.

Die Beibehaltung des an sich bekannten Korrosionsschutzes zumindest für die Filamente der äußersten Schicht mittels einer Schicht aus kupferhaltiger und/oder zinkhaltiger Legierung stellt gleichzeitig einen gut bewährte Haftvermittlung bereit.

Eine Bezugszeichenliste ist Bestandteil der Beschreibung

### Bezugszeichenliste:

- 1: Gummiartikel, im gezeigten Beispiel ein Förderband
- 2: umgebender Gummi
- 3: Metallseile, vorzugsweise aus Stahl
- 4: innere Schichten von 3
- 4a: Drähte der inneren Schichten 4, hier allein der Seelendraht
- 5: äußere Schicht von 3
- 5a: Drähte der äußeren Schicht
- 6: Schicht aus kupferhaltiger Legierung
- 7: Schicht mit intrinsisch leitfähigem Polymer

## Patentansprüche

1. Gummiartikel (1) mit einer Verstärkung aus Seilen (3), die in mindestens zwei Schichten (4, 5) gegliedert sind, wobei zumindest ein Filament (4a) einer inneren Schicht (4) aus einer metallischen Legierung besteht, wobei zumindest die Filamente der äußersten Schicht (5) des Seiles haftend in dem umgebenden Gummi (2) ggf. unter Verwendung eines Haftvermittlers wie z. B. Messing eingebettet sind, wobei alle aus metallischer Legierung bestehenden Filamente (4, 5) mit einer gegen Korrosion schützenden Schicht überzogen sind,
**dadurch gekennzeichnet,** daß zumindest einige Filamente (4a) der inneren Schicht(en) (4) gegen Korrosion durch eine Schicht (7) geschützt sind, die ein intrinsisch leitfähiges Polymer enthält, während die übrigen Filamente (5a) in an sich bekannter Weise gegen Korrosion geschützt sind, z. B. durch einen Messingüberzug (6).

2. Gummiartikel nach Anspruch 1 dadurch gekennzeichnet, daß als intrinsisch leitfähiges Polymer Polyanilin oder ein Derivat davon verwendet ist.

3. Gummiartikel nach Anspruch 1 dadurch gekennzeichnet, daß zumindest einige der mit dem intrensisch leitenden Polymer beschichteten Filamente (4a) in an sich bekannter Weise aus Stahl bestehen.

4. Gummiartikel nach Anspruch 1 dadurch gekennzeichnet, daß die mit dem intrensisch leitenden Polymer beschichteten Filamente (4a) unter dieser Polymerbeschichtung (7) eine an sich bekannte kupferhaltige Schicht (6) aufweisen.

5. Gummiartikel nach Anspruch 1 dadurch gekennzeichnet, daß die mit dem intrensisch leitenden Polymer beschichteten Filamente (4a) unter dieser Polymerbeschichtung (7) eine zinkhaltige Schicht (6) aufweisen.

6. Verfahren zum Herstellen eines Gummiartikels (1) nach Anspruch 1 mit einer Verstärkung aus gegen Korrosion geschützten Stahlseilen (3), die in mindestens zwei Schichten (4, 5) gegliedert sind,
dadurch gekennzeichnet, dass zunächst ein intrinsisch leitfähiges Polymer in einem als Schmiermittel für den Drahtziehprozeß geeigneten Öl, oder Ölsäure oder Fett oder dergleichen dispergiert wird und am Düseneinlauf zumindest der letzten Ziehdüse zum Ziehen mindestens einiger der Drähte (4a) aufgebracht wird, die zur Bildung der inneren Schicht(en) (4) der Stahlseile (3) vorgesehen sind, während die übrigen Filamente (5a) der Stahlseile (3) in an sich bekannter Weise gegen Korrosion geschützt werden, z. B. durch Beschichten mit Messing (6).

7. Verfahren nach Anspruch 6, dadurch gekennzeichnet, dass das mit dem intrinsisch leitfähigen Polymer angereicherte Schmiermittel vor dem Aufbringen am Düseneinlauf einer Ziehdüse in Wasser emulgiert wird.

8. Verfahren nach Anspruch 6 wobei das intrinsisch leitfähige Polymer zunächst in Isopropanol dispergiert wird, dadurch gekennzeichnet, daß diese Dispersion als Schmiermittel am Ziehdüseneinlauf zumindest der letzten Ziehdüse aufgebracht wird, wobei in der Umgebung der Ziehdüse eine reaktionsträge Schutzgasatmosphäre, vorzugsweise CO₂ und/oder Stickstoff und/oder Edelgase enthaltend, aufgebaut wird.

## Claims

1. Rubber article (1), having a reinforcement formed from cables (3), which are disposed in at least two layers (4, 5), at least one filament (4a) of an internal layer (4) being formed from a metallic alloy, at least the filaments of the outermost layer (5) of the cable being firmly embedded in the surrounding rubber (2), possibly by using a bonding agent such as brass, for example, and all of the filaments (4, 5), which are formed from the metallic alloy, being coated with a layer which protects against corrosion, characterised in that at least some of the filaments (4a) of the internal layer(s) (4) are protected against corrosion by a layer (7), which contains an intrinsically conductive polymer, while the remaining filaments (5a) are protected against corrosion in a manner known per se, e.g. by a brass coating (6).

2. Rubber article according to claim 1, characterised in that polyaniline or a derivative thereof is used as the intrinsically conductive polymer.

3. Rubber article according to claim 1, characterised in that at least some of the filaments (4a), which are coated with the intrinsically conductive polymer, are formed from steel in a manner known per se.

4. Rubber article according to claim 1, characterised in that the filaments (4a), which are coated with the intrinsically conductive polymer, have a copper-containing layer (6), which is known per se, beneath this polymer coating (7).

5. Rubber article according to claim 1, characterised in that the filaments (4a), which are coated with the intrinsically conductive polymer, have a zinc-containing layer (6) beneath this polymer coating (7).

6. Method of producing a rubber article (1) according to claim 1, having a reinforcement formed from steel cables (3), which are protected against corrosion and are disposed in at least two layers (4, 5), characterised in that an intrinsically conductive polymer is initially dispersed in an oil or oleic acid or fat or the like, which is suitable as a lubricant for the wire drawing process and is applied to the nozzle inlet of at least the last drawing nozzle for drawing at least some of the wires (4a) which are provided to form the internal layer(s) (4) of the steel cables (3), while the remaining filaments (5a) of the steel cables (3) are protected against corrosion in a manner known per se, e.g. by coating with brass (6).

7. Method according to claim 6, characterised in that the lubricant, which is enriched with the intrinsically conductive polymer, is emulsified in water prior to being applied to the nozzle inlet of a drawing nozzle.

8. Method according to claim 6, wherein the intrinsically conductive polymer is initially dispersed in isopropanol, characterised in that this dispersion is applied as a lubricant to the drawing nozzle inlet of at least the last drawing nozzle, an inert protective gas atmosphere, preferably containing CO₂ and/or nitrogen and/or inert gases, being built-up in the ambient surroundings of the drawing nozzle.

## Revendications

1. Article en caoutchouc (1) comportant une armature de câbles (3) qui sont répartis en au moins deux couches (4, 5), dans lequel au moins un fil continu (4a) d'une couche intérieure (4) est constitué d'un alliage métallique, dans lequel au moins les fils continus de la couche extérieure (5) du câble sont enrobés, avec adhérence, dans le caoutchouc (2) qui les entoure, éventuellement avec emploi d'un médiateur d'adhérence comme par exemple du laiton, dans lequel tous les fils continus (4, 5), constitués d'alliage métallique sont revêtus d'une couche de protection contre la corrosion,
caractérisé par le fait qu'au moins quelques fils continus (4a) de la couche intérieure (des couches intérieures) (4) sont protégés contre la corrosion par une couche (7) qui contient un polymère à conduction intrinsèque, tandis que les autres fils continus (5a) sont protégés contre la corrosion d'une façon connue en soi, par exemple par un revêtement de laiton (6).

2. Article en caoutchouc selon la revendication 1, caractérisé par le fait que comme polymère à conduction intrinsèque on emploie une polyaniline ou l'un de ses dérivés.

3. Article en caoutchouc selon la revendication 1, caractérisé par le fait qu'au moins quelques-uns des fils continus (4a), revêtus d'un polymère à conduction intrinsèque, sont, de façon connue en soi, constitués d'acier.

4. Article en caoutchouc selon la revendication 1, caractérisé par le fait que les fils continus (4a) revêtus du polymère à conduction intrinsèque présentent, sous ce revêtement de polymère (7), une couche contenant du cuivre (6), connue en soi.

5. Article en caoutchouc selon la revendication 1, caractérisé par le fait que les fils continus (4a) revêtus du polymère à conduction intrinsèque présentent, sous ce revêtement de polymère (7) une couche contenant du zinc (6).

6. Procédé de fabrication d'un article en caoutchouc (1) selon la revendication 1, comportant une armature de câbles d'acier (3) qui sont protégés contre la corrosion et sont répartis en au moins deux couches (4, 5),
caractérisé par le fait que l'on disperse tout d'abord un polymère à conduction intrinsèque dans une huile, un acide oléique ou une graisse ou analogue convenant pour le processus de tréfilage et qu'on l'applique à l'entrée de la filière au moins des dernières passes de tréfilage pour tréfiler au moins quelques-uns des fils (4a) qui sont prévus pour former la couche intérieure (les couches intérieures) (4) des câbles d'acier (3), tandis que les autres fils continus (5a) des câbles d'acier (3) sont protégés contre la corrosion d'une façon connue en soi, par exemple par un revêtement de laiton (6).

7. Procédé selon la revendication 6, caractérisé par le fait qu'avant de l'appliquer à l'entrée d'une filière de tréfilage, on émulsifie dans l'eau le lubrifiant enrichi du polymère à conduction intrinsèque.

8. Procédé selon la revendication 6, dans lequel on disperse tout d'abord le polymère à conduction intrinsèque dans de l'isopropanol, caractérisé par le fait que l'on applique cette dispersion comme lubrifiant à l'entrée d'au moins la filière de la dernière phase de tréfilage, dans lequel on établit, dans l'environnement de la filière de tréfilage, une atmosphère de gaz de protection peu réactive, de préférence CO₂ et/ou azote et/ou gaz rares.
